Europäisches Patentamt

European Patent Office

Office européen des brevets

(11) Veröffentlichungsnummer: **0 180 874**
**A2**

(12) **EUROPÄISCHE PATENTANMELDUNG**

(21) Anmeldenummer: 85113643.2

(22) Anmeldetag: 26.10.85

(51) Int. Cl.⁴: **B65F 1/14** , B09B 3/00

(30) Priorität: 29.10.84 DE 3439531

(43) Veröffentlichungstag der Anmeldung:
14.05.86 Patentblatt 86/20

(84) Benannte Vertragsstaaten:
AT BE CH FR GB LI NL SE

(71) Anmelder: **Bock, Normann**
**Zum Brook 48**
**D-2808 Syke - Barrien(DE)**

(72) Erfinder: **Bock, Normann**
**Zum Brook 48**
**D-2808 Syke - Barrien(DE)**

(74) Vertreter: **Jabbusch, Wolfgang, Dr.**
**Elisabethstrasse 6**
**D-2900 Oldenburg(DE)**

(54) Verfahren und Einrichtung zum Sammeln von Recycling-Gütern.

(57) Die Erfindung betrifft ein Verfahren und eine Einrichtung zum Sammeln verschiedener Recycling-Güter, wie Altpapier und Altglas.

Das erfindungsgemäße Verfahren zeichnet sich dadurch aus, daß an den Müll-Sammelplätzen der Wohngebiete neben den Müllbehältern auch die Sammelbehälter für Recycling-Güter, wie Altpapier, Blechdosen, Kunststoffe, Altglas, bereitgestellt werden, und daß dabei für die Altglasbehälter eine Einrichtung zur Lärmunterdrückung vorgesehen ist.

Vorzugsweise werden an den Müll-Sammelplätzen auch Behälter für bisher nur in Sonderaktionen gesammelte Recycling-Güter, wie Kleidungsstücke, Lumpen und Bücher, bereitgestellt.

Die Einrichtung zur Ausübung des Verfahrens, die getrennte Kammern für Recycling-Güter aufweist, zeichnet sich dadurch aus, daß auch eine Kammer (5) für Müll vorgesehen ist und daß für die Kammern von Altglas (11,12) eine Einrichtung zur Lärmunterdrückung vorgesehen ist.

Vorzugsweise sind die Kammern Teile eines einheitlichen Sammelbehälters, wobei, insbesondere für Schadstoff-Sammelgüter, wie Batterien und Medikamente, kleinere in eine größere Kammer einsetzbare Gefäße (18) vorgesehen sind.

EP 0 180 874 A2

## Verfahren und Einrichtung zum Sammeln von Recycling-Gütern

Die Erfindung bezieht sich auf ein Verfahren und eine Einrichtung zum Sammeln verschiedener Recycling-Güter, wie Altpapier und Altglas.

Es ist bekannt, in Wohngebieten Sammelstellen für Müll einerseits und Recycling-Güter andererseits einzurichten. Umleerbehälter für Müll werden regelmäßig in unmittelbarer Nachbarschaft der Wohnhäuser bzw. Wohnblöcke angelegt, Sammelbehälter für Altglas dagegen mit Rücksicht auf den mit dem Einwerfen von Glas verbundenen Lärm regelmäßig an von Wohnhäusern weiter abgelegenen Stellen aufgestellt. Die Folge davon ist, daß die Empfehlung bzw. Forderung der getrennten Ablieferung von Flaschen und anderem Altglas von einem Großteil der Bevölkerung nicht befolgt wird. Für Altpapier, Kleider, gelegentlich auch Bücher, wurden bisher meist besondere Sammelaktionen veranstaltet, zu denen von Zeit zu Zeit durch die Tageszeitungen aufgerufen wird. Seit einiger Zeit stehen Recycling-Sammelbehälter mit Kammern auch für Altpapier zur Verfügung (DE-OS 3232229). Da aber diese Sammelbehälter auch Kammern für Altglas enthalten, deren Gebrauch mit Lärm verbunden ist, eignen sie sich ebenfalls nicht zur Aufstellung auf Sammelpätzen in unmittelbarer Nähe von Wohnhäusern. Das hat zur Folge, daß trotz Bereitstellung von solchen Behältern sowohl Altglas als auch Altpapier überwiegend in die bequem erreichbaren, nahegelegenen Müllbehälter wandert. Ferner ist es üblich, von Zeit zu Zeit Sammelaktionen für Kleider und Bücher zu veranstalten, die dann von den Haushalten in speziell dafür verteilten oder in eigenen Behältnissen vor die Tür gestellt werden. Diese Sammelaktionen finden in unregelmäßier Folge statt. Die Folge davon ist, daß sich sehr viele an diesen Sonderaktionen nicht beteiligen, entweder, weil sie die Termine überhaupt nicht bemerken, vergessen oder die Kleidungsstücke bzw. Bücher nicht rechtzeitig zur Ablieferung bereithalten.

Der Erfindung liegt die Aufgabe zugrunde, diesem Mangel bei der Sammlung von Recycling-Gütern abzuhelfen.

Aus den angegebenen Motiven kann eine Verbesserung der Sammelaktion für Müll einerseits und Recycling-Güter andererseits nur dadurch erreicht werden, daß Recycling-Güter gemeinsam mit dem Müll gesammelt, abgeholt und zu den Deponien gebracht werden, daß zu diesem Zweck in den Sammelstellen der Wohnorte in ununterbrochener Folge und gemeinsam Sammelbehälter sowohl für Müll als auch für Recycling-Güter bereitgestellt werden und daß dabei Sorge getragen wird, daß die bisher mit dem Gebrauch von Glassammelbehältern verbundenen Lärmbelästigungen vermieden werden.

Um auch dem schlechten Ergebnis von Sammelaktionen, Textilien und weiteren Abstoßgütern abzuhelfen, werden erfindungsgemäß zusammen mit den Sammelbehältern für Müll auch Behälter für solche Güter bereitgestellt. Damit wird die Gelegenheit geboten, solche Güter zeitunabhängig, so wie sie gerade in den Haushalten anfallen, abzuliefern, und es werden besondere Sammelaktionen weitgehend überflüssig. Bisher findet man in den Müllbergen neben Altpapier und Altglas auch viele Sammelaktionsgüter, wie Kleidungsstücke und nicht mehr gebrauchte Bücher. Durch die ständige Bereithaltung getrennter Sammelbehälter für all diese verschiedenen Abstoßgüter wird die Erzieh hung zum angestrebten Sondieren verschiedener, vom Haushalt nicht mehr benötigter Sammelgüter wesentlich erleichtert und gefördert, indem diese Sondierung zur Hausgewohnheit gemacht wird; denn im Hause fängt alles an; wenn dort nicht bereits die Sondierung erfolgt, werden all diese verschiedenen Güter auch weiterhin zum überwiegenden Teil in den allgemeinen Müll eingehen.

Es ist ferner auf folgenden Umstand hinzuweisen. Bei der Abgabe von Altglas haben sich zwei getrennte Verfahren eingebürgert. Ein nicht geringer Teil der Getränkefabrikanten betreibt dadurch eine recht wirksame Werbung für das eigene Fabrikat, daß bei Rückgabe der leeren Flaschen ein Bonus bezahlt wird. Dadurch werden die Verbraucher natürlich sehr wirksam veranlaßt, bei ihrem Einkauf wieder zum gleichen Fabrikat zu greifen. Volkswirtschaftlich ist jedoch dieses Verfahren höchst unbefriedigend, wie sich durch Statistiken und Berechnungen der Wiederverwendungskosten leicht feststellen läßt. Schon allein die Kosten des Rücktransportes - nicht selten wandern die vollen Flaschen von Süddeutschland nach Norddeutschland oder umgekehrt und müssen denselben Weg als Leergut zurückgehen - zehren den effektiven Wert des Rückgabegutes auf. Überdies müssen aber die Rückgabeflaschen auch neu etikettiert, verschlossen und auf dem Wege zur Füllstation gereinigt oder auch wegen Alterserscheinungen auf dem langen Rückweg ausgeschieden werden. Eine Nachrechnung ergibt bald, daß von jedem Getränkefabrikanten nicht unerhebliche Summen draufgezahlt werden, allerdings mit dem nicht hinwegzuleugnenden Erfolg eines meist gesteigerten Umsatzes der eigenen Ware. Aus gleichen privatwirtschaftlichen Motiven könnten demnächst auch Rückgabeflaschen für Weine und Spirituosen auf dem Markt erscheinen. Daß dies bisher nicht geschehen ist, dürfte nur darauf zurückzuführen sein, daß Weine und Spirituosen vorwiegen über große Entfernungen verfrachtet werden. Ein gleiches ließe sich auch für andere Waren, die in Gläsern verpackt werden, sagen. Volkswirtschaft lich vertretbar sind zweifellos die Einweggläser, welche vom Verbraucher über die Sammelstelle zu den Glashütten wandern, welche in verhältnismäßig gleichmäßiger Verteilung über das Land zur Verfügung stehen und das Altglas in sowohl ökonomisch als auch ökologisch vertretbarer Weise verarbeiten. Noch vorteilhafter ist es, die über öffentliche Sammelstellen anfallenden heilen Flaschen dadurch der Wiederverwertung zuzuführen, daß sie in Sortieranlagen nach vorprogrammierten Erkennungsmerkmalen sortiert und für wiederholten Gebrauch eingesetzt werden. Für die Verbraucher würde sich bei Abschaffung der Rückgabewerbung auch noch der Vorteil ergeben, daß sie nicht zwischen Rückgabegläsern und Einweggläsern zu unterscheiden hätten und sich dadurch leichter und schneller an die Sondierung von Altglas gewöhnen würden.

Zweckmäßig werden die zur Durchführung dieses einheitlichen Sammelverfahrens vorgesehenen Behälter dem neuen Verfahren gemeinsamen Sammelns von Müll und Recycling-Gütern angepaßt, vorzugsweise auch unter Zuordnung einer oder mehrerer Kammern für frühere Sammelaktionsgüter, wie Kleidungsstücke, Textilien und/oder Bücher. Ferner können, um gleichzeitig auch Schadstoffe zu sammeln und aus dem verrottbaren allgemeinen Müll fernzuhalten, im Behälter Halter zur Aufnahme eines oder mehrerer loser Gefäße oder Spezialkammern für Schadstoffe enthaltendes Sammelgut, wie Batterien und Medikamente, vorgesehen sein, welchen entsprechende Eingabekanäle am Behälter zugeordnet sind. Werden diese Halter bei einer Bauweise nach DE-OS 3232229 hinter der Heckklappe angebracht, können die Schadstoffe nach Öffnen der Heckklappe als erstes Sammelgut entnommen werden.

Der Verschluß der Sammelbehälter kann so ausgebildet sein, daß er keiner besonderen Sicherung gegen unbefugtes Öffnen bedarf, indem er so angeordnet wird, daß er durch die Behälterstandfläche oder einen Aufnahme-Ständer am Sammelplatz blockiert wird.

Zur Vermeidung der mit dem Einwerfen von Altglas verbundenen Lärmbelästigung können verschiedene Mittel zur Schallunterdrückung eingesetzt werden. Unter der Einwurföffnung kann hierzu ein schalldämpfender Fangschirm angebracht werden. Dieser kann am Boden der Kammer für Altglas angeordnet werden. Bei einer bevorzugten Ausbildung besteht der Fangschirm aus einer am Boden der Kammer für Altglas anliegenden Schallisolierverkleidung und einer die Schallisolierverkleidung abdeckenden Abdeckung, die gegen ein Verrutschen gesichert ist. Die Schallisolierverkleidung dämpft den Aufprall des Altglases auf dem Boden der Kammer und verhindert ein Aufschlagen des Altglases auf der nackten Behälterwandung, welches ein Dröhnen des gesamten Sammelbehälters zur Folge hätte.

Die Abdeckung schützt die Schallisolierverkleidung vor Beschädigungen durch das Altglas und vor aus dem Altglas möglicherweise auslaufender Restflüssigkeit. Die Abdeckung kann beispielsweise aus Gummibahnen ausgebildet sein, die über die Schallisolierverkleidung gespannt sind. Es kann z.B. aber auch ein dünnes Blech als Abdeckung auf die Schallisolierverkleidung aufgelegt werden. Bei der Sicherung dieses Bleches gegen ein Verrutschen ist darauf zu achten, daß das Blech nicht fest mit der Wandung des Behälters verbunden wird, damit das Blech bei Auftreffen von Altglas die Wandung des Sammelbehälters nicht zu resonanten Schwingungen anregt, die Lärm verursachen würden. Vorzugsweise ist das Blech mittels Winkelblechen am Boden des Sammelbehälters gehalten, die die Randbereiche des Bleches lose übergreifen.

Der Werkstoff für die Schallisolierverkleidung kann beispielsweise ein kostengünstiger, leicht zu verarbeitender Polystyrol-Schaumstoff sein.

Um ein Zersplittern der Gläser beim Aufeinandertreffen aus größerer Fallhöhe zu verhindern, ist es vorteilhaft, den Fangschirm so auszubilden, daß er lastabhängig mit Fallhemmung durch Feder- oder Gewichtskraft absinkt, so daß er entsprechend dem Grad der Füllung schließlich am Boden der Kammer für Altglas landet. Dabei kann der Fangschirm als Fahrstuhl ausgebildet sein oder um eine horizontale Achse aus einer Hochlage zum Kammerboden hin schwenkbare Fangflügel aufweisen, wobei er die Behälterwandung möglichst sammelgutdicht bestreicht. Eine besonders vorteilhafte Bauweise ergibt sich dadurch, daß die Flügelachse in der Kammer zentral angeordnet ist und daß die Kammerwandung zumindest im Schwenkbereich der Flügel konzentrisch und sammelgutabdichtend zur Schwenkachse verläuft. Hierzu kann der Fangschirm aus zwei gegensinnig schwenkbaren Flügeln bestehen, die vorzugsweise beide vom eingeworfenen Altglas belastet werden, so daß sie sich schließlich etwa in der Vertikalebene am zylindrischen Boden treffen. Zur Fallhemmung sind hierbei einfache Torsionsfederstäbe geeignet. Damit die Fangschirme beim Entleeren des Behälters nicht vorzeitig zur Hochlage hin zurückkehren, können sie in der Tieflage durch eine Verriegelung gesichert werden, die erst nach der Entriegelung, vorzugsweise nach automatischer Entriegelung, beim Wiederschließen des Behälters aufgehoben wird. Eine so ausgebildete Fangschirmanordnung gibt die vorteilhafte Möglichkeit, die Kammern kreiszylindrisch und einen in Kammern unterteilten einheitlichen Sammelbehälter als schlichten Rundkessel auszubilden.

Der Anfall insbesondere von üblichen Glassorten, wie Klarglas und Buntglas, wobei das Buntglas weiter in Grünglas und Braunglas getrennt werden kann, ist regional und saisonal unterschiedlich. Beispielsweise ist in Weingegenden der Buntglasanfall sehr hoch, während z.B. in Regionen, in denen verhältnismäßig viel Schnaps getrunken wird, der Anfall von Schnapsflaschen aus Klarglas überproportional hoch ist. Auch der Anteil von Dosen und Altpapier ist beispielsweise regional und saisonal unterschiedlich. Da eine kostengünstige Serienfertigung des erfindungsgemäßen Sammelbehälters erwünscht ist und der Sammelbehälter in allen Regionen eines Landes gleichermaßen eingesetzt werden soll, ist es vorteilhaft, wenn der Sammelbehälter an die regionalen und saisonalen Bedürfnisse angepaßt werden kann. Dies wird nach einer Weiterbildung der Erfindung, für die auch selbständiger Schutz beansprucht wird, dadurch erreicht, daß die Kammern des Sammelbehälters für die Aufnahme des verschiedenartigen Sammelgutes umrichtbar und hierzu auswechselbare Einwurfschablonen vorgesehen sind. Durch ein Auswechseln der Einwurfschablonen, die beispielsweise Einwurföffnungen für Dosen oder Altglas, Einwurfschlitze für Altpapier oder mit Klappen verschlossene Öffnungen zum Einwurf von Müll aufweisen, kann der erfindungsgemäße Sammelbehälter mit Vorteil an die vorherrschenden Bedürfnisse angepaßt werden. Beispielsweise können in einer Region mehrere Kammern Einwurfschablonen für Altglas erhalten, während in einer anderen Region bespielsweise mehrere Kammern für den Einwurf von Altpapier durch Anordnung von entsprechenden Einwurfschablonen ausgerüstet sind.

Nach einer nächsten Weiterbildung der Erfindung, für die ebenfalls selbständiger Schutz beansprucht wird, ist der erfindungsgemäße Sammelbehälter so ausgebildet, daß das Volumen wenigstens einer der Kammern veränderbar ist. Beispielsweise kann die Kammer für Klarglas vergrößert werden, wenn das ursprünglich für diese Kammer bereitgestellte Volumen zur Aufnahme des anfallenden Klarglases nicht ausreicht. Diese Vergrößerung einer Kammer kann zum Beispiel durch Verkleinerung einer benachbarten, nicht so stark in Anspruch genommenen Kammer erreicht werden.

Bei einer bevorzugten Ausbildung zeichnet sich der erfindungsgemäße Sammelbehälter durch wenigstens eine zwei einander benachbarte Kammern, voneinander trennende Zwischenwand aus, die wenigstens bereichsweise ortsveränderbar angeordnet ist. Ein Vergrößern einer Kammer ist in vorteilhafter Weise durch eine Ortsveränderung einer Zwischenwand möglich, wodurch die benachbarte Kammer gleichzeitig verkleinert wird. Vorzugsweise sind sämtliche Zwischenwände des Behälters ortsveränderbar, so daß unterschiedlich Größenverhältnisse der einzelnen Kammern durch Umordnung der Zwischenwände vorgegeben werden können. Es ist beispielsweise auch denkbar, daß eine Zwischenwand völlig entnommen wird, so daß ursprünglich zwei einander benachbarte Kammern zu einer einzigen Kammer vereinigt werden.

Bei einer bevorzugten Ausbildung des Sammelbehälters ist die Zwischenwand in einen oberen Wandabschnitt und einen unteren Wandabschnitt unterteilt, wobei der untere Wandabschnitt um eine waagerechte, quer zur Längsachse des Sammelbehälters verlaufende Schwenkachse verschwenkbar ist. Eine Entleerung des Sammelbehälters ist durch die vorzugsweise stirnseitige Umleeröffnung des Behälters durch Abkippen des Sammelbehälters möglich, wobei die unteren Wandabschnitte der Zwischenwände verschwenken, so daß sich die Zwischenwände öffnen und ein Herausrutschen des Sammelgutes aus den Kammern erfolgt. Damit ein Verschwenken der unteren Wandabschnitte vor dem gewünschten Entleeren des Sammelbehälters verhindert wird, sind die unteren Wandabschnitte an der Behälterwand mittels einer betätigbaren Verriegelungseinrichtung verriegelbar Zum Entleeren des Behälters werden die Verriegelungen der Verriegelungseinrichtungen der unteren Wandabschnitte der einzelnen Zwischenwände nacheinander gelöst, so daß die Kammern nacheinander, beispielsweise in getrennte Großraumbehälter, entleert werden können und eine Vermischung der Kammerinhalte verhindert wird.

Bei einer Ausbildung des erfindungsgemäßen Sammelbehälters ist vorgesehen, daß der obere Wandabschnitt der Zwischenwand beidseitig aus der Ebene des unteren Wandabschnittes auslenkbar ist, und daß der untere freie Rand des oberen Wandabschnittes mit dem oberen, festen Rand des unteren Wandabschnittes durch eine den Auslenkweg des oberen Wandabschnittes begrenzende, sich über die gesamte Breite der Zwischenwand erstreckende, flexible Abtrennung verbunden ist. Eine Auslenkung des oberen Wandabschnittes kann wahlweise in eine der einander benachbarten Kammern erfolgen, die durch die Zwischenwand voneinander getrennt werden, so daß die Kammer, in die die Auslenkung des oberen Wandabschnittes erfolgt, in ihrem oberen Bereich zugunsten der benachbarten Kammer verkleinert wird. Damit zwischen dem oberen Wandabschnitt und dem unteren Wandabschnitt durch die Auslenkung des oberen Wandabschnittes keine Lücke entsteht, durch die Sammelgut von einer Kammer in die benachbarte Kammer eindringen kann, sind die beiden Wandabschnitte der Zwischenwand durch die flexible Abtrennung miteinander verbunden, die beispielsweise ein Tuch, ein Netz, eine Folie oder ähnliches sein kann. Mit Vorteil erfolgt die Auslenkung des oberen Wandabschnittes durch das sich in einer der Kammern aufhäufende Sammelgut selbst. Wenn sich in einer Kammer das Sammelgut schneller bis zum oberen Wandabschnitt anhäuft als in der dieser Kammer benachbarten Kammer, so drückt das Sammelgut den oberen Wandabschnitt in die weniger gefüllte Kammer hinein, wodurch die stärker in Anspruch genommene Kammer automatisch vergrößert wird. Beispielsweise kann der obere Wandabschnitt in Richtung seiner Flächennormalen verschiebbar angeordnet sein, er kann z.B. auch um eine waagerechte Achse pendelnd im Behälter abgehängt sein.

Mit Vorteil kann der gesamte obere Wandabschnitt aus einer flexiblen Abtrennung ausgebildet sein, die von dem sich in einer Kammer aufhäufenden Sammelgut in eine benachbarte Kammer hinein ausgebeult werden kann, wodurch sich das Volumen der stärker in Anspruch genommenen Kammer vergrößert.

Bei einer anderen Ausbildung des erfindungsgemäßen Behälters ist der obere Wandabschnitt beidseitig aus der Ebene des unteren Wandabschnittes ausklappbar angeordnet und kann in unterschiedlichen Klappstellungen an der Behälterwand verriegelt werden. Je nach Klappstellung des oberen Wandabschnittes der sie trennenden Zwischenwand, weisen zwei einander benachbarte Kammern ein vorbestimmbares und veränderbares Größenverhältnis auf.

Der obere Wandabschnitt kann eine Auswölbung aufweisen, und der obere Wandabschnitt kann so in den Behälter eingesetzt werden, daß die Auswölbung in die Kammer vorragt, die voraussichtlich weniger in Anspruch genommen wird, als die ihr benachbarte, durch die Zwischenwand von ihr getrennte Kammer. Ein Vergrößern der stärker in Anspruch genommenen Kammer erfolgt durch ein Ausklappen des oberen Wandabschnittes in Richtung der Auswölbung in die weniger in Anspruch genommene Kammer hinein. Ein Umordnen des oberen Wandabschnittes, bei dem die Seiten des oberen Wandabschnittes vertauscht werden, bewirkt, daß die Auswölbung des oberen Wandabschnittes in die entgegengesetzte Richtung weist.

Bei einer bevorzugten Ausbildung des erfindungsgemäßen Behälters ist die Schwenkachse des unteren Wandabschnittes am unteren Rand des oberen Wandabschnittes angeordnet und ist die Zwischenwand insgesamt in Richtung ihrer Flächennormalen verschiebbar angeordnet, so daß eine Kammer in ihrer gesamten Höhenerstreckung volumenäßig vergrößert werden kann. Vorzugsweise ist im oberen Bereich der Behälterwand wenigstens eine Schiene angeordnet, an der der obere Wandabschnitt abgehängt ist und entlang welcher der obere Wandabschnitt unter Mitnahme des unteren Wandabschnittes gleitend verschoben werden kann. Beispielsweise kann die Schiene eine parallel zur Längsrichtung des Behälters verlaufende Rundstange sein, die in einem Abstand zur Behälterwand angeordnet ist und an der der obere Wandabschnitt mittels Haken angehängt ist.

Vorzugsweise umfaßt die Verriegelungseinrichtung des unteren Wandabschnittes wenigstens einen an der Behälterwand angeord neten, quer in den Verschiebeweg der Zwischenwand bewegbaren Riegel und mehrere, an der Zwischenwand entlang des Verschiebeweges angeordnete Riegelaufnahmen. Die Zwischenwand kann in unterschiedlichen Schiebestellungen verriegelt werden, wobei der Riegel der Verriegelungseinrichtung jeweils in die Riegelaufnahme eingebracht werden kann, die sich, je nach Schiebestellung der Zwischenwand, gerade im Betätigungsweg des Riegels befindet. Durch die Anzahl der Riegelaufnahmen und durch den Abstand, den sie voneinander besitzen, ist die Anzahl und die Position der Schiebestellungen der Zwischenwand, in denen die Zwischenwand verriegelbar ist, vorgebbar.

Bei einer bevorzugten Ausbildung der Verriegelungseinrichtung ist der Riegel ein Schwenkriegel, der in die jeweils zugeordnete Riegelaufnahme eingeschwenkt werden kann, und sind als Riegelaufnahmen Fächer vorgesehen, die von U-förmigen Bügeln gebildet sind, welche mit ihren freien Enden an der Zwischenwand angeordnet sind und von der Zwischenwand vorstehen. Ist der Riegel in ein Fach eingeschwenkt, so ist die Zwischenwand arretiert, weil eine Bewegung der Zwischenwand durch ein Anschlagen der Zwischenwand oder des Bügels an dem Riegel ein Verschieben der Zwischenwand verhindert. Die Anzahl der Riegelaufnahmen wird bei einer bevorzugten Ausbildung in vorteilhafter Weise dadurch vergrößert, daß jeder von einem der Bügel umgrenzte Bereich durch parallel zu der Zwischenwand angeordnete und die Schenkel des U-förmigen Bügels verbindende Sprossen in mehrere Fächer unterteilt ist.

Etwa in der Höhe der Schwenkachse des unteren Wandabschnittes ist bei einer bevorzugten Ausbildung des Sammelbehälters wenigstens eine die Zwischenwand seitlich in unterschiedlichen Schiebestellungen an der Behälterwand verriegelnde Verriegelung vorgesehen, die ein Durchbiegen der Zwischenwand im Bereich der Schwenkachse verhindert und den oberen Wandabschnitt an der Behälterwand fixiert. Diese Verriegelung kann beispielsweise eine Bolzensteckverbindung oder ein ähnlicher Riegelmechanismus sein.

In der Zeichnung ist die Erfindung an mehreren Ausführungsbeispielen veranschaulicht. Es zeigen:

Fig. 1 eine Seitenansicht eines Sammelbehälters für Müll und verschiedene Recycling-Güter,

Fig. 2 eine Stirnansicht des Sammelbehälters gemäß Fig. 1,

Fig. 3a einen Querschnitt des Sammelbehälters gemäß Fig. 1 mit einem am Boden des Behälters angeordneten Fangschirm,

Fig. 3b den in Fig. 3a mit gestrichelten Linien umrahmten Ausschnitt des Sammelbehälters in vergrößertem Maßstab,

Fig. 4 einen Querschnitt durch den Sammelbehälter gemäß Fig. 1 mit einem als Fahrstuhl ausgebildeten Fangschirm,

Fig. 5 einen Querschnitt durch den Sammelbehälter gemäß Fig. 1 mit einem einarmigen, schwenkbaren Fangschirm,

Fig. 6 einen Querschnitt durch den Sammelbehälter gemäß Fig. 1 mit einem doppelarmigen, schwenkbaren Fangschirm,

Fig. 7 einen schematischen Teilschnitt durch einen Sammelbehälter gemäß Fig. 1 mit verschiebbarer Zwischenwand,

Fig. 8 einen Behälter mit austauschbaren Einwurfschablonen,

Fig. 9a ein erstes Ausführungsbeispiel einer ortsveränderbaren Zwischenwand in Vorderansicht,

Fig. 9b die Zwischenwand gemäß Fig. 9a in Seitenansicht,

Fig. 9c die Zwischenwand gemäß den Fig. 9a und 9b in einem Schnitt entlang der in Fig. 9b mit 9c-9c bezeichneten strichpunktierten Linie in vergrößertem Maßstab,

Fig. 10 ein zweites Ausführungsbeispiel einer ortsveränderbaren Zwischenwand,

Fig. 11 ein drittes Ausführungsbeispiel einer ortsveränderbaren Zwischenwand,

Fig. 12 ein viertes Ausführungsbeispiel einer ortsveränderbaren Zwischenwand,

Fig. 13 ein fünftes Ausführungsbeispiel einer ortsveränderbaren Zwischenwand und

Fig. 14 ein sechstes Ausführungsbeispiel einer ortsveränderbaren Zwischenwand.

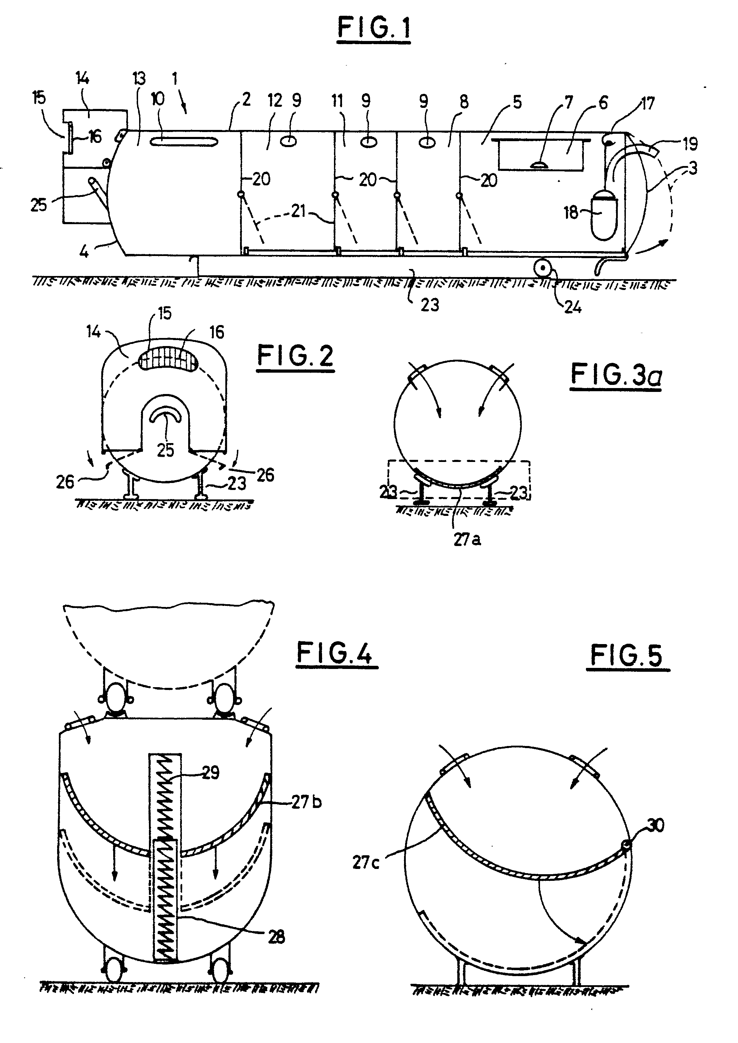

Der Behälter der Ausführungsform nach Fig. 1 besteht aus einem liegenden Kessel 1 mit einem kreisrunden Querschnitt seines Mantels 2 und gewölbten Kesselböden 3 und 4, deren linker Kesselboden 4 üblicher Weise fest mit dem Mantel verschweißt ist, während der rechte Kesselboden 3 als Deckel zum Verschluß der dort vorgesehenen, stirnseitigen Austrittsöffnung ausgebildet ist.

Der Behälter ist zum Sammeln sowohl von allgemeinem Müll als auch Recycling-Gütern, wie Altpapier und Altglas, Metall- und Kunststoffdosen, sowie zusätzlich zum Sammeln von Kleidungsstücken und Schadstoffen, wie Batterien und Medikamenten, eingerichtet und für jedes dieser Güter mit einer getrennten Kammer mit Einwurföffnung in der Behälterwandung versehen.

An den Behälterdeckel 3 schließt sich die größte Kammer 5 für den allgemeinen Müll an, der erfahrungsgemäß etwa 40 % des gesamten Behältervolumens beansprucht, mit einer größeren durch einen Klappdeckel 6 mit Handgriff 7 verschließbaren Einwurföffnung. Es folgen darauf eine Kammer 8 für Metall- und Kunststoffdosen, mit an der Oberseite, aber etwas seitlich, bequem zum Einwurf angeordneten runden Einwurflöchern 9, eine Kammer 11 für Buntglas mit runden Einwurflöchern 9, eine Kammer 13 für Altpapier mit schlitzförmigen Einwurflöchern 10, eine in Huckepackweise am geschlossenen Ende des Behälters, an Haltevorsprüngen der Wandung befestigte Kammer 14 für Kleidungsstücke mit einer etwas größeren, aber durch einen gefederten Innendeckel 16 gegen unbefugte Entnahme gesicherten Einwurf 15.

An dem heckseitigen, als Deckel ausgebildeten Behälterboden 3 sind inseitig Halter 17 zum Aufhängen von Schadstoffgefäßen 18 angebracht, über welchen im Deckel die Wiederentnahme ausschließende Einwurfrüssel 19 angebracht sind. Die Kammern sind gegeneinander durch Zwischenwände 20 voneinander getrennt und zum Entleeren in der unteren Hälfte mit um Scharniere klappbarem Deckel 21 versehen. Der Behälter ist an seiner Unterseite mit Kufen 23 und mit Bodenrollen 24 versehen.

Zum Umleeren des Sammelbehälters in Großsammelbehälter, insbesondere in· der zugeordneten Deponie, sowie auch zum Verladen auf den Transportwagen der Sammelgesellschaft ist an der festen Stirnseite eine Aufnahmeöse 25 für den Haken des transporteigenen Verladegerätes vorgesehen.

Die Huckepackkammer ist so gestaltet, daß sie die Aufnahmeöse 25 tunnelförmig überwölbt. Zur Entnahme der eingeworfenen Kleidungsstücke ist sie an beiden Seiten mit je einer Klappe 26 versehen.

Die in den Trennwänden angeordneten Klappdeckel sind mit Verriegelungseinrichtungen versehen, die in an sich bekannter Weise durch ein Schrittschaltwerk in Form einer durchlaufenden, gegebenenfalls vom Führerhaus aus zu betätigenden Welle mit winkelversetzten Nocken betätigt werden, so daß nacheinander zunächst die Kammer 5 für Müll und anschließend in der Reihenfolge ihrer Anordnung im Sammelbehälter die Verschlüsse für die Kammern 11, 12 und 13 gelöst werden, so daß die Sammelgüter nacheinander in die hierzu vorgesehenen Deponien entleert werden können.

In den Kammern für Altglas sind Einrichtungen zur Geräuschminderung vorgesehen. Fig. 3a zeigt eine solche Kammer mit am Boden angeordnetem, schalldämmendem Fangschirm 27 in Form eines auswechselbaren Bodenbelages. In Fig. 3b ist dieser Bodenbelag gemäß Fig. 3a in vergrößertem Maßstab dargestellt. Der Bodenbelag setzt sich zusammen aus einer auf dem Boden des Behälters aufliegenden Schallisolierverkleidung 34 und einer die Schallisolierverkleidung 34 abdeckenden Abdeckung 35. Die Abdeckung 35 wird mittels am Behälterboden angeordneten Winkelblechen 23 gegen ein Verrutschen gesichert.

Fig 4 bis 7 zeigen Ausführungsformen mit lastabhängig absinkendem Fangschirm. Der in Fig. 4 dargestellte Fangschirm 27b ist an einer zentralen Säule 28 mit Rückholfeder 29 fahrstuhlartig auf- und abbeweglich gelagert. Dabei ist der Sammelbehälter oben, im Hubbereich des Schirmrandes, vorzugsweise rechteckig ausgeführt, derart, daß der Fangschirm den über ihm befindlichen Raum gegen den unter ihm befindlichen Raum ausreichend dicht gegen ein Durchfallen von Glas abdichtet. Die Kammer kann unten, wie in Fig. 4 dargestellt, so gewölbt sein, daß sich der gegebenenfalls federnde Fangschirm in sie einschmiegt.

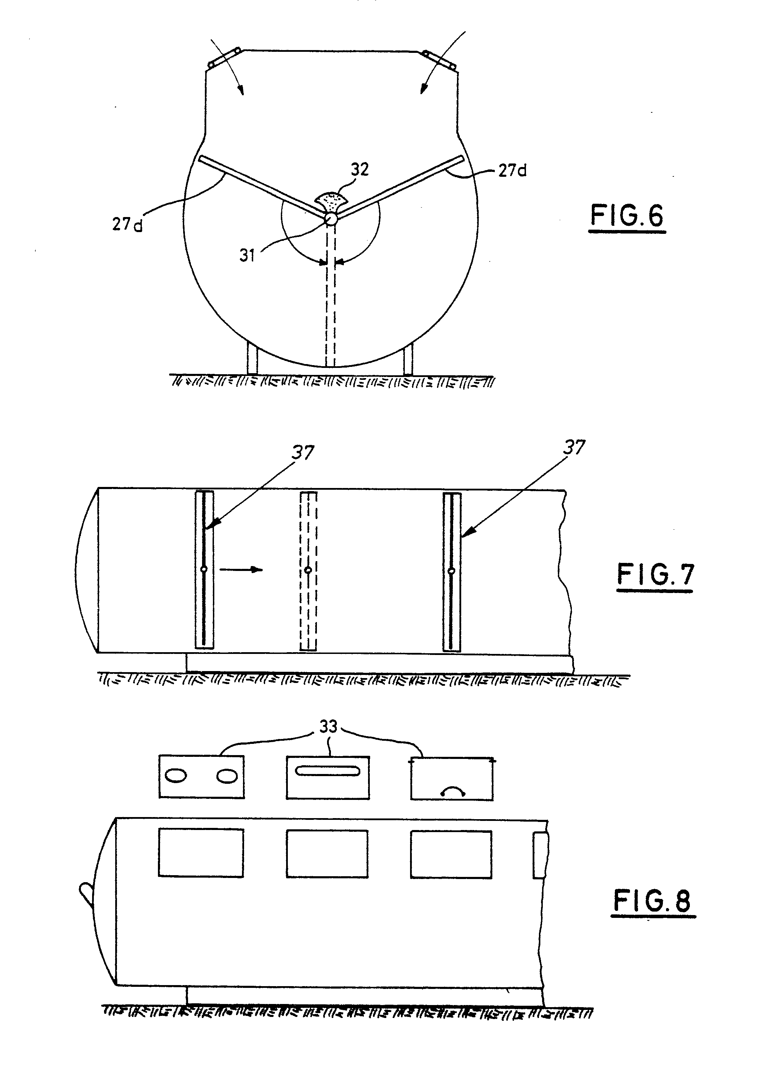

Fig. 5 und 6 zeigen Ausführungsformen mit flügelförmigen Fangschirmen, die um eine horizontale Achse schwenkbar sind. Bei dem in Fig. 5 dargestellten Behälter ist die Flügelachse 30 etwa in mittlerer Höhe des Behälters seitlich angebracht und der Fangschirm 27c als schalenförmiger, konkav gewölbter Flügel ausgebildet, der mit seinem freien Ende an der der Achse gegenüberliegenden Innenseite des Behälters entlangstreicht. Die Achse selbst besteht aus einem Torsionsfederstab, der den Flügel in der Hochlage zu halten sucht, derart, daß der Fangschirm lastabhängig bis zum Boden hin absinkt. Wenn er den Boden erreicht hat und spätestens beim Öffnen der Glaskammer zum Zweck des Entleerens, wird der Fangschirm in seiner Tiefla ge verriegelt, bis die Kammer völlig entleert worden ist. Danach wird er freigegeben und kehrt in seine Hochlage zurück.

Fig. 6 zeigt eine Ausführungsform mit zweiflügeligem Fangschirm 27d, und zentraler Flügelachse 31, vorzugsweise als Doppelfederstab ausgebildet. Die radialen Flügel sind gegensinnig bis zum Zusammenstoß am Boden schwenkbar. Die Torsionsfederstäbe der beiden Flügel können so ausgelegt sein, daß sie der Belastung durch eingeworfene Flaschen erst nachzugeben beginnen, wenn sich der von ihnen eingeschlossene Winkelraum zu füllen beginnt, damit, auch wenn der Einwurf nur durch eines der beiden Einwurflöcher 9 erfolgen sollte, beide Flügel im wesentlichen gleich belastet werden. Über der Flügelachse kann eine stoß- und schalldämpfende Kappe 32 angebracht sein.

Die zuvor beschriebene doppelflügelige Ausführung des Fangschirmes eignet sich auch zur Anwendung bei einem Sammelbehälter der wie in Fig. 6, nur in seiner unteren Hälfte kreiszylindrisch, in der oberen Hälfte dagegen kantig ausgeführt ist und sich damit durch eine bessere Raumausnutzung bzw. ein bei gleicher Breite größeres Fassungsvermögen auszeichnet. Außerdem kann dieser Sammelbehälter auch höher sein als es dem Durchmesser des unteren, kreiszylindrischen Teiles entspricht.

Da der prozentuale Anteil der anfallenden Recycling-Güter aus statistischen Erhebungen bekannt und erfahrungsgemäß auch ziemlich gleichbleibend ist, kann das vorliegende Verfahren und die Einrichtung- zumindest für strukturell ähnliche Wohngebiete - mit festen Volumenverhältnissen der Recyclingkammern zueinander und auch zur Müllkammer praktiziert werden. Schwankungen der Raumbedarf-Proportion z.B. jahreszeitlich, oder durch Strukturveränderungen bedingt - lassen sich auch dadurch ausgleichen, daß mehrere Sammelbehälter gegeneinander austauschbar bereitgehalten werden. Zum gleichen Zweck kann die Volumenproportion dadurch verändert werden, daß eine größere Zahl kleinerer Kammern vorgesehen wird mit der Möglichkeit, der gewünschten Proportion durch Aufteilung nach Zahl möglichst nahezukommen. Bei einheitlichen Behältern mit Kammerbildung durch Zwischenwände läßt sich die optimale Proportion auch dadurch verwirklichen, daß die Zwischenwände verstellbar ausgeführt werden (Fig. 7 und Fig. 9 bis 14).

Fig. 8 zeigt einen Mehrkammer-Behälter, der sich durch Umrichten seiner Einwurföffnungen schnell und einfach verschiedenen örtlich oder auch zeitlich schwankenden Proportionen durch Auswechselung einfacher Einwurfschablonen 33 anpassen läßt. Fig. 7 zeigt einen Sammelbehälter mit Anpassung durch Veränderung der Kammerunterteilung. Hierzu sind die Zwischenwände 37 verstellbar. und auswechselbar, so daß im Bedarfsfall auch der Komponentenzahl nach veränderliche Proportionen unter Beibehaltung der für den Transport gegebenen Außenmaße zu realisieren sind. Diese Bauweise kommt zweckmäßig in Kombination mit auswechselbaren Einwurfschablonen nach Fig. 8 zur Anwendung.

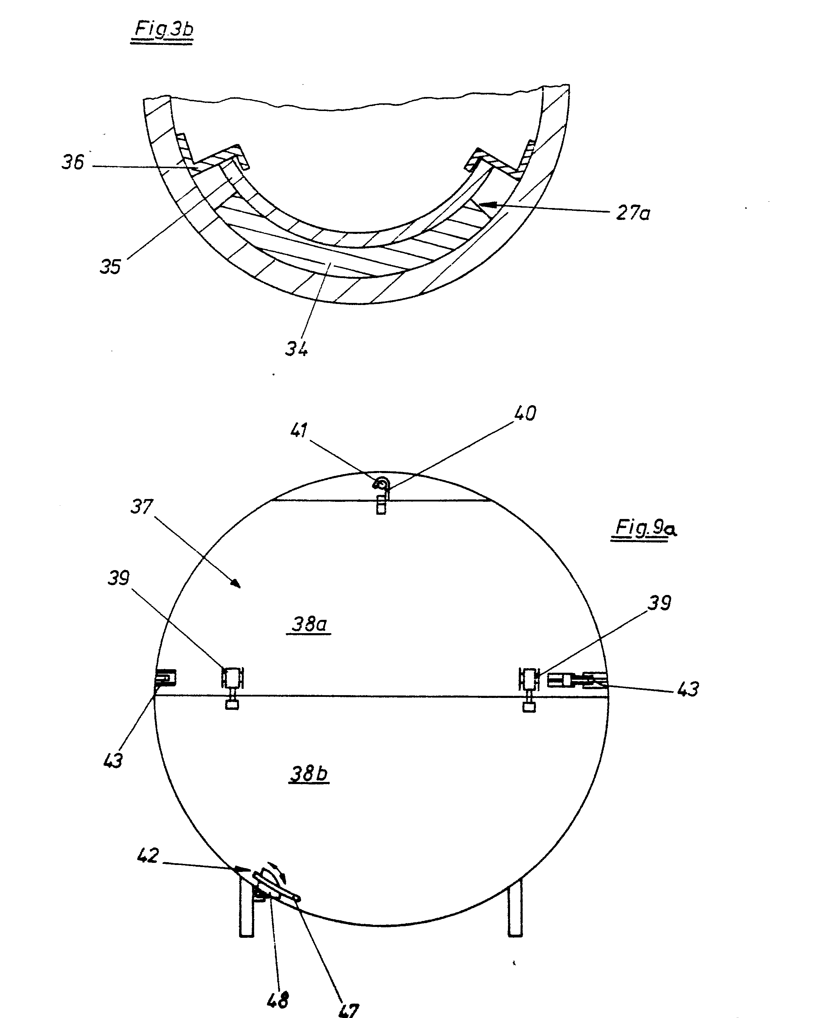

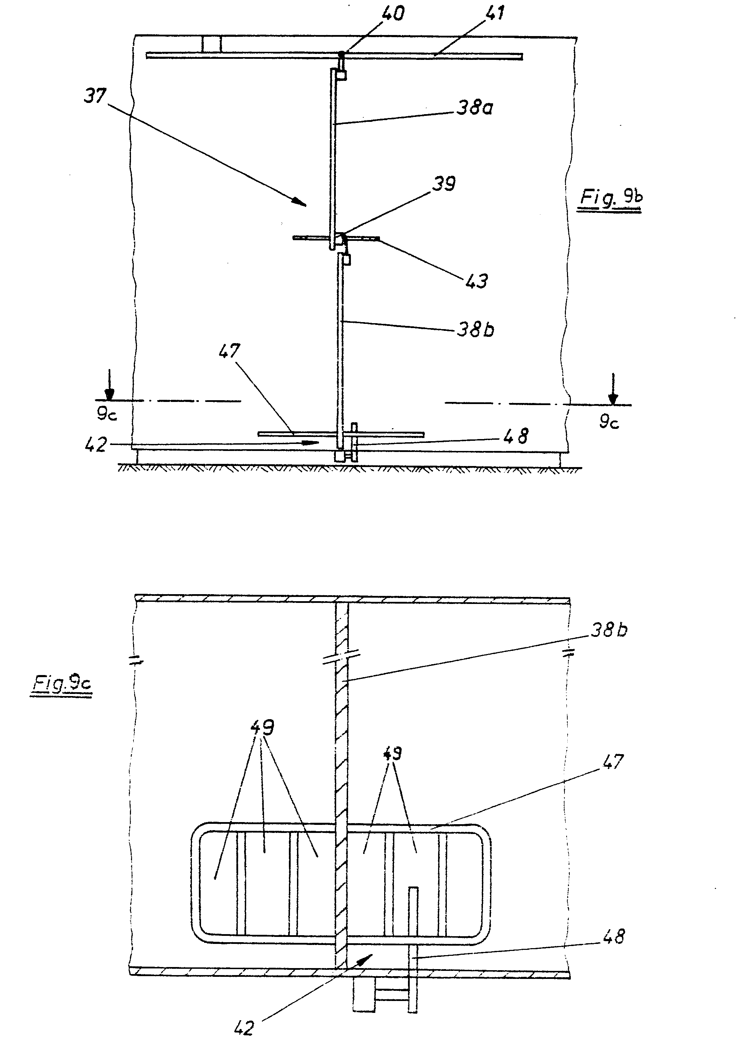

In den Fig. 9a,b,c bis 14 sind Ausführungsbeispiele einer ortsveränderbaren Zwischenwand 37 gemäß Fig. 7 dargestellt. Die Zwischenwand 37 ist in eine obere Hälfte 38a und in eine untere Hälfte 38b unterteilt. Der untere

Wandabschnitt 38b ist um eine waagerechte, quer zur Längsachse des Behälters verlaufende Schwenkachse 39 schwenkbar abgehängt. Am Boden des Behälters ist eine Verriegelungseinrichtung 42 angeordnet, mit deren Hilfe der untere Wandabschnitt 38b bis zur Befüllung des Sammelbehälters verriegelt werden kann, während die Verriegelung der Verriegelungseinrichtung 42 zur Entleerung des Behälters gelöst wird, so daß hierzu ein Verschwenken des unteren Wandabschnittes 38b möglich ist.

In den Fig. 9a,b,c sind Schwenkachsen 39 für den unteren Wandabschnitt 38b am unteren Rand des oberen Wandabschnittes 38a angeordnet. An den Schwenkachsen 39 ist der untere Wandab schnitt 38b mit Haken angehängt. Die obere Hälfte 38a ist mittels eines Hakens 40 an einer parallel zur Längsmittelachse des Sammelbehälters verlaufenden im oberen Bereich des Sammelbehälters angeordnete Schiene 41 angehängt, so daß die Zwischenwand 37 insgesamt in Richtung ihrer Flächennormalen verschiebbar ist.

Die Verriegelungseinrichtung 42 des unteren Wandabschnittes 38b umfaßt einen schwenkbar an der Behälterwand angeordneten Riegel 48 und an der Zwischenwand 37 angeordnete U-förmige Bügel 47, die mit parallel zu der Zwischenwand 37 angeordneten, die Schenkel der Bügel 47 verbindenden Sprossen Fächer 49 bilden, die als Riegelaufnahmen dienen.

Etwa in Höhe der Schwenkachsen 39 wird die Zwischenwand 37 bei Verschiebung entlang Einhängeleisten 43 geführt, an denen sie beispielsweise mittels Bolzensteckverbindungen verriegelt werden kann.

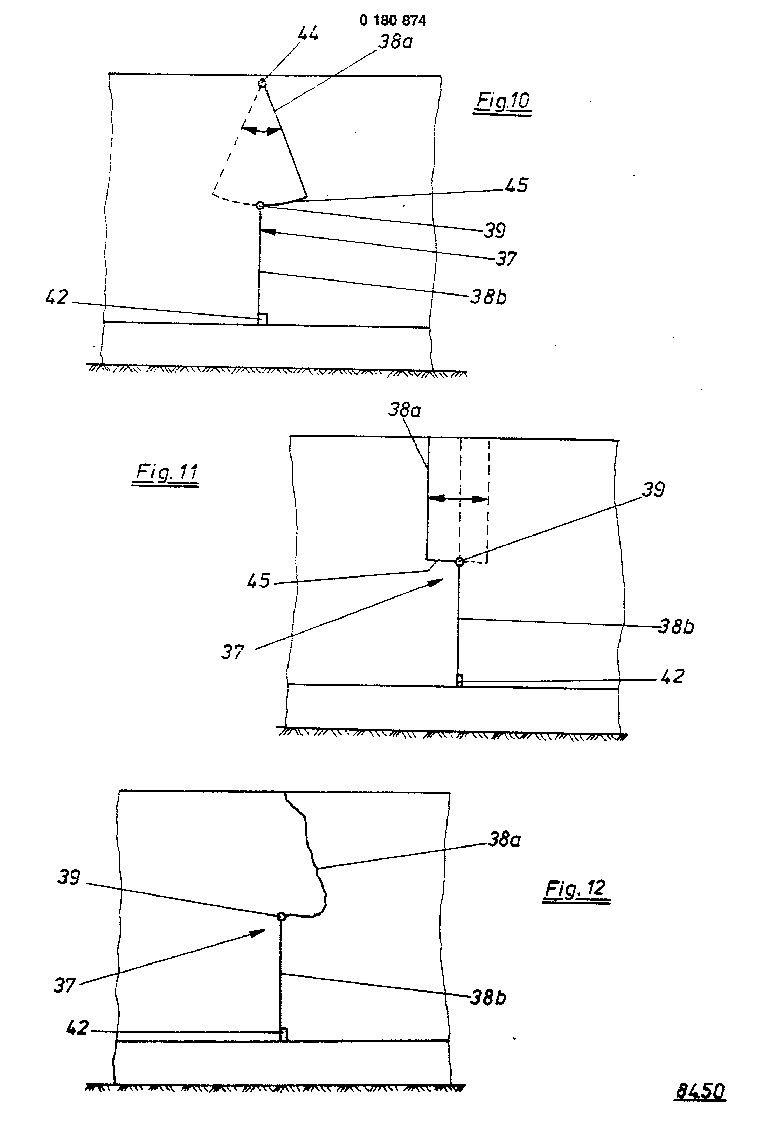

In den Fig. 10 bis 14 sind Ausführungsbeispiele von Zwischenwänden 37 dargestellt, bei denen der obere Wandabschnitt 38a ortsveränderbar ausgebildet ist.

Bei dem in Fig. 10 dargestellten Ausführungsbeispiel ist der obere Wandabschnitt 38a an einer im oberen Bereich des Behälters, parallel zur Schwenkachse 39 angeordneten Schwenkachse 44 pendelnd abgehängt. Die beiden Wandabschnitt 38a, 38b sind mittels einer flexiblen Abtrennung 45 miteinander verbunden, die sich über die gesamte Breite der Zwischenwand 37 erstreckt und am unteren Rand des oberen Wandabschnittes 38a und am oberen Rand des unteren Wandabschnittes 38b befestigt ist. Das in Fig. 11 dargestellte Ausführungsbeispiel einer Zwischenwand 37 entspricht prinzipiell dem Ausführungsbeispiel gemäß Fig. 10, in diesem Fall ist jedoch der obere Wandabschnitt 38a verschiebar statt pendelnd an der Behälterwand angeordnet.

In Fig. 12 ist eine Zwischenwand 37 gezeigt, deren oberer Wandabschnitt 38a insgesamt von einer flexiblen Abtrennung 45 gebildet ist.

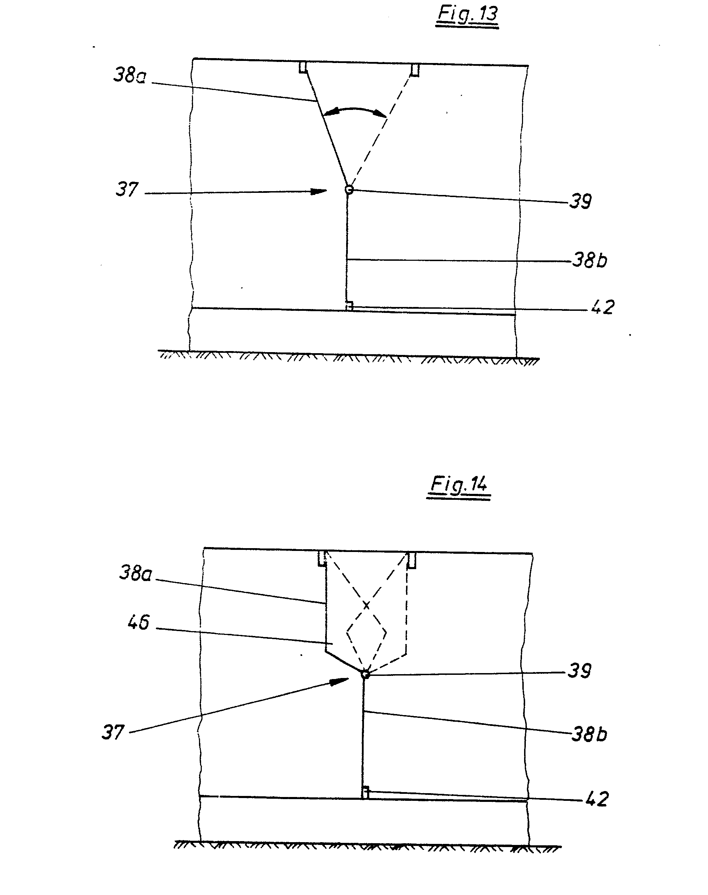

Die in den Fig. 13 und 14 gezeigten Zwischenwände 37 weisen obere Wandabschnitte 38a auf, die schwenkbar an den Schwenkachsen 39 der unteren Wandabschnitte 38b angeordnet sind, und die aus den Ebenen der unteren Wandabschnitte 38b herausklappbar sind. An der Wand des Sammelbehälters sind Verriegelungen vorgesehen, die die oberen Wandabschnitte 38a in vorbestimmten Klappstellungen verriegeln. Der obere Wandabschnitt 38a der Fig. 13 ist eben ausgebildet, während der obere Wandabschnitt 38a der Fig. 14 abgekantet ausgebildet ist und somit eine Auswölbung 46 aufweist, die zu einer Seite über den unteren Wandabschnitt 38b vorragt. Dieser abgekantete, obere Wandabschnitt 38a ist auch um 180° gedreht anordbar, so daß die Auswölbung 46 seitenvertauscht ist, wie durch die gestrichelten Linien in Fig. 14 angedeutet.

**Ansprüche**

1. Verfahren zum sondierten Sammeln von Recycling-Gütern, wie Altpapier, Buntglas und Klarglas, dadurch gekennzeichnet, daß an den Müll-Sammelplätzen der Wohngebiete neben den Müllbehältern auch die Sammelbehälter für Recycling-Güter, wie Altpapier, Blechdosen, Kunststoffe, Weißglas, Braunglas, Buntglas bereitgestellt werden, und daß dabei für die Altglasbehälter eine Einrichtung zur Lärmunterdrückung vorgesehen ist.

2. Verfahren nach Anspruch 1, dadurch gekennzeichnet, daß an den Müll-Sammelplätzen auch Behälter (14) für bisher nur in Sonderaktionen gesammelte Recycling-Güter, wie Kleidungsstücke, Lumpen und Bücher, bereitgestellt werden.

3. Verfahren nach Anspruch 1 oder 2, dadurch gekennzeichnet, daß die Recycling-Güter gemeinsam mit dem Müll abgefahren werden.

4. Verfahren nach einem der Ansprüche 1 oder 2, dadurch gekennzeichnet, daß die Recycling-Güter und Müll getrennt abgefahren werden.

5. Verfahren nach einem der Ansprüche 1 bis 4, dadurch gekennzeichnet, daß in an sich bekannter Weise der Müll in Müllwagen-Großbehälter umgeladen, die Recycling-Güter hingegen in ihren Sammelbehältern abgefahren und die gefüllten durch leere Recycling-Sammelbehälter ersetzt werden.

6. Verfahren nach Anspruch 3, dadurch gekennzeichnet, daß Müll und Recycling-Güter in ihren Sammelbehältern abgefahren werden.

7. Verfahren nach einem der Ansprüche 1 bis 6, dadurch gekennzeichnet, daß Müll und Recycling-Güter in gesonderten, ihren speziellen Bestimmungsstationen (Deponien) zugeordneten Behältern gesammelt und abgefahren werden.

8. Verfahren nach einem der Ansprüche 5 bis 7, dadurch gekennzeichnet, daß die Recycling-Güter von den Sammelplätzen der Wohnorte in ihren Sammelbehältern zu Hauptsammelstellen, vorzugsweise zu den Mülldeponien, gefahren und dort in Waggons oder sonstige Großraumbehälter umgeladen und in diesen zu ihren Deponien bzw. Verwertungsstätten gebracht werden.

9. Einrichtung zur Ausübung des Verfahrens nach einem der Ansprüche 1 bis 8, mit getrennten Kammern für Recycling-Güter, dadurch gekennzeichnet, daß auch eine Kammer für Müll (5) vorgesehen ist, und daß für die Kammern für Altglas (11, 12) eine Einrichtung zur Lärmunterdrückung vorgesehen ist.

10. Einrichtung zur Ausübung des Verfahrens nach einem der Ansprüche 2 bis 8, mit getrennten Kammern für Recycling-Güter, dadurch gekennzeichnet, daß auch Kammern (14) für bisher nur in Sonderaktionen gesammelte Recycling-Güter, wie Kleidungsstükke, Lumpen und Bücher vorgesehen sind.

11. Einrichtung nach einem der Ansprüche 9 oder 10, dadurch gekennzeichnet, daß auch eine oder mehrere Kammern (18) für Schadstoffe enthaltendes Sammelgut, wie Batterien und Medikamente, vorgesehen sind.

12. Einrichtung nach einem der Ansprüche 9 bis 11, dadurch gekennzeichnet, daß die Kammern (5,11,12,13) Teile eines einheitlichen Sammelbehälters sind.

13. Sammelbehälter nach Anspruch 12, gekennzeichnet durch lose, kleinere in eine größere Kammer einsetzbare Gefäße (18), insbesondere für die Schadstoff-Sammelgüter.

14. Sammelbehälter nach Anspruch 12 oder 13, mit einer mehreren Kammern gemeinsamen Unleeröffnung, dadurch gekennzeichnet, daß die Kammern bzw. Gefäße für Schadstoffe (18) unmittelbar hinter dem Deckel (3) der Umleeröffnung angeordnet sind.

15. Sammelbehälter, insbesondere nach einem der Ansprüche 9 bis 14, mit einer oder mehreren Kammern (11,12) für Altglas, dadurch gekennzeichnet, daß unter der Einwurföffnung (9, 10) der Glassammelkammer (11,12) ein schalldämpfender Fangschirm (27a, b,c,d) angebracht ist.

16. Sammelbehälter nach Anspruch 15, dadurch gekennzeichnet, daß ein Fangschirm (27a) am Boden der Kammer für Altglas (11,12) angebracht ist.

17. Sammelbehälter nach Anspruch 16, dadurch gekennzeichnet, daß der Fangschirm (27a) aus einer am Boden der Kammer (11,12) für Altglas anliegenden Schallisolierverkleidung (34) und einer die Schallisolierverkleidung (34) abdeckenden Abdeckung (35) besteht.

18. Sammelbehälter nach Anspruch 17, dadurch gekennzeichnet, daß die Abdeckung (35) gegen ein Verrutschen gesichert ist.

19. Sammelbehälter nach Anspruch 18, dadurch gekennzeichnet, daß die Abdeckung (35) ein Blech ist, welches in Randbereichen mittels am Boden der Kammer (11,12) für Altglas angeordneten Winkelblechen am Boden gehalten ist, die die Randbereiche lose übergreifen.

20. Sammelbehälter nach einem der Ansprüche 17 bis 19, dadurch gekennzeichnet, daß der Werkstoff für die Schallisolierverkleidung (34) ein Polystyrol-Schaumstoff ist.

21. Sammelbehälter nach Anspruch 15, dadurch gekennzeichnet, daß der Fangschirm (27b, 27c, 27d) als lastabhängig auf und ab sich bewegender Schirm mit Fallhemmung durch Federn oder Gewichte (29) ausgebildet ist, der sich in Tieflage dem Behälterboden anschmiegt.

22. Sammelbehälter nach Anspruch 21, dadurch gekennzeichnet, daß der Fangschirm (27b) als Fahrstuhl ausgebildet ist.

23. Sammelbehälter nach Anspruch 21, dadurch gekennzeichnet, daß der Fangschirm (27c, 27d) mit um eine horizontale Achse (30, 31) zum Kammerboden hin schwenkbarem Flügel versehen ist.

24. Sammelbehälter nach Anspruch 23, dadurch gekennzeichnet, daß der Fangschirm (27) die Behälterwandung sammelgutdicht bestreicht.

25. Sammelbehälter nach Anspruch 23 und 24, dadurch gekennzeichnet, daß die Fangschirmachse (31) in der Kammer zentral angeordnet ist, und daß der Fangschirm (27d) aus zwei gegensinnig schwenkbaren Flügeln besteht.

26. Sammelbehälter nach einem der Ansprüche 23 bis 25, dadurch gekennzeichnet, daß zur Fallhemmung Torsionsfederstäbe vorgesehen sind.

27. Sammelbehälter nach einem der Ansprüche 21 bis 26, dadurch gekennzeichnet, daß eine die Fangschirme (27b,c,d) in der Tieflage sichernde Verriegelung vorgesehen ist.

28. Sammelbehälter nach einem der Ansprüche 21 bis 27, dadurch gekennzeichnet, daß sein unterer Teil kreiszylindrisch ausgebildet ist.

29. Sammelbehälter nach einem der Ansprüche 12 bis 28, dadurch gekennzeichnet, daß er als Rundkessel ausgebildet ist.

30. Sammelbehälter nach einem der Ansprüche 12 bis 29, dadurch gekennzeichnet, daß der Verschluß der Auswurföffnung durch den Behälterstand am Sammelplatz blockiert wird.

31. Sammelbehälter nach einem der Ansprüche 12 bis 30, dadurch gekennzeichnet, daß die Kammern (5,11,12,13) des Sammelbehälters für die Aufnahme verschiedenartigen Sammelgutes umrichtbar und hierzu auswechselbare Einwurfschablonen (33) vorgesehen sind.

32. Sammelbehälter nach einem der Ansprüche 12 bis 31, dadurch gekennzeichnet, daß das Volumen wenigstens einer der Kammern (5, 11,12,13) veränderbar ist.

33. Sammelbehälter nach Anspruch 32, gekennzeichnet durch wenigstens eine zwei einander benachbarte Kammern (5,11,12,13) voneinander trennende Zwischenwand (37), die wenigstens bereichsweise ortsveränderbar angeordnet ist.

34. Sammelbehälter nach Anspruch 33, dadurch gekennzeichnet, daß die Zwischenwand in einen oberen Wandabschnitt (38a) und einen unteren Wandabschnitt (38b) unterteilt ist, daß der untere Wandabschnitt (38b) um eine waagerechte, quer zur Längsachse des Behälters verlaufende Schwenkachse (39) schwenkbar abgehängt ist, und daß an der Behälterwand eine betätigbare Verriegelungseinrichtung (42) für den unteren Wandabschnitt (38b) vorgesehen ist.

35. Sammelbehälter nach Anspruch 34, dadurch gekennzeichnet, daß der obere Wandabschnitt (38a) der Zwischenwand (37) beidseitig aus der Ebene des unteren Wandabschnittes (38b) auslenkbar ist, und daß der untere freie Rand des oberen Wandabschnittes (38a) mit dem oberen festen Rand des unteren Wandabschnittes (38b) durch eine den Auslenkweg des oberen Wandabschnittes (38a) begrenzende, sich über die gesamte Breite der Zwischenwand (37) erstreckende flexible Abtrennung (45) verbunden ist.

36. Sammelbehälter nach Anspruch 35, dadurch gekennzeichnet, daß der obere Wandabschnitt (38a) in Richtung seiner Flächennormalen verschiebbar angeordnet ist.

37. Sammelbehälter nach Anspruch 35, dadurch gekennzeichnet, daß der obere Wandabschnitt (38a) um eine waagerechte Achse (44) pendelnd abgehängt ist.

38. Sammelbehälter nach Anspruch 34, dadurch gekennzeichnet, daß der obere Wandabschnitt (38a) aus einer den oberen festen Rand des unteren Wandabschnittes (38b) mit der darüberliegenden Behälterwand verbindenden, flexiblen Abtrennung (45) ausgebildet ist.

39. Sammelbehälter nach Anspruch 34, dadurch gekennzeichnet, daß der obere Wandabschnitt (38a) um die Schwenkachse (39) des unteren Wandabschnittes (38b) beidseitig aus der Ebene des unteren Wandabschnittes ausklappbar angeordnet ist, und daß an der Behälterwand den oberen Wandabschnitt (38a) in unterschiedlichen Klappstellungen verriegelnde, betätigbare Verriegelungen vorgesehen sind.

40. Sammelbehälter nach Anspruch 39, dadurch gekennzeichnet, daß der obere Wandabschnitt (38a) eine Auswölbung (46) aufweist, die einseitig über den unteren Wandabschnitt (38b) vorragt, und daß der obere Wandabschnitt (38a) seitenvertauscht umordbar ist.

41. Sammelbehälter nach Anspruch 34, dadurch gekennzeichnet, daß die Schwenkachse (39) des unteren Wandabschnittes (38b) am unteren Rand des oberen Wandabschnittes (38a) angeordnet ist, und daß die Zwischenwand (37) insgesamt in Richtung ihrer Flächennormalen verschiebbar angeordnet ist.

42. Sammelbehälter nach Anspruch 41, dadurch gekennzeichnet, daß im oberen Bereich der Behälterwand wenigstens eine Schiene (41) angeordnet ist, an der der obere Wandabschnitt (38a) abgehängt ist und entlang welcher der obere Wandabschnitt (38a) unter Mitnahme des unteren Wandabschnittes (38b) gleitend verschoben werden kann.

43. Sammelbehälter nach Anspruch 41 oder 42, dadurch gekennzeichnet, daß die Verriegelungseinrichtung (42) des unteren Wandabschnittes (38b) wenigstens einen an der Behälterwand angeordneten, quer in den Verschiebeweg der Zwischenwand (37) bewegbaren Riegel (48) und mehrere, an der Zwischenwand (37) entlang des Verschiebeweges angeordnete Riegelaufnahmen umfaßt.

44. Sammelbehälter nach Anspruch 43, dadurch gekennzeichnet, daß der Riegel (48) ein Schwenkriegel ist und daß als Riegelaufnahmen Fächer (49) vorgesehen sind, die von U-förmigen Bügeln (47) gebildet sind, welche mit ihren freien Enden an der Zwischenwand (37) angeordnet sind und von der Zwischenwand (37) vorstehen.

45. Sammelbehälter nach Anspruch 44, dadurch gekennzeichnet, daß jeder von einem der Bügel (47) umgrenzte Bereich durch parallel zu der Zwischenwand (37) angeordnete und die Schenkel des U-förmigen Bügels (47) verbindende Sprossen in mehrere Fächer (49) unterteilt ist.

46. Sammelbehälter nach einem der Ansprüche 41 bis 45, dadurch gekennzeichnet, daß etwa in Höhe der Schwenkachse (39) des unteren Wandabschnittes (38b) wenigstens eine die Zwischenwand (37) seitlich in unterschiedlichen Schiebestellungen an der Behälterwand arretierende Verriegelung vorgesehen ist.

## FIG.1

## FIG.2

## FIG.3a

## FIG.4

## FIG.5

_FIG.6_

_FIG.7_

_FIG.8_

_Fig.3b_

36

35

27a

34

41

40

37

_Fig.9a_

39

39

_38a_

43

43

_38b_

42

48

47

8450

0 180 874

*Fig. 9b*

Fig.9c

8450

0 180 874

Fig.10

Fig. 11

Fig. 12

8450

_Fig. 13_

_Fig. 14_

8450